# EUROPÄISCHE PATENTSCHRIFT

(11) **EP 4 079 438 B1**
(45) Veröffentlichungstag und Bekanntmachung des Hinweises auf die Patenterteilung: **15.04.2026**
(21) Anmeldenummer: 21170098.4
(22) Anmeldetag: 23.04.2021
(51) Int. Cl.: B23K 9/32, C25F 7/00, B23K 9/10

(54) **LICHTBOGENSCHWEISSGERÄT MIT SCHWEISSNAHTREINIGUNGSFUNKTION, SYSTEM MIT EINEM SOLCHEN LICHTBOGENSCHWEISSGERÄT, UND ENTSPRECHENDES VERFAHREN**
ARC WELDING APPARATUS HAVING A WELD SEAM CLEANING FUNCTION, SYSTEM WITH SUCH ARC WELDING APPARATUS, AND CORRESPONDING METHOD
APPAREIL DE SOUDAGE À L'ARC À FONCTION DE NETTOYAGE DU CORDON DE SOUDURE, SYSTÈME AVEC UN TEL APPAREIL DE SOUDAGE À L'ARC, ET MÉTHODE CORRESPONDANTE

(43) Veröffentlichungstag der Anmeldung: 26.10.2022
(73) Patentinhaber: EWM GmbH, 56271 Mündersbach (DE)
(72) Erfinder: SZCZESNY, Michael, 56271 Mündersbach (DE)
(74) Vertreter: Cohausz & Florack

(56) Entgegenhaltungen:
- AT-U1- 464
- DE-A1- 102015 115 267
- DE-A1- 19 844 832
- JP-A- 2001 336 000
- JP-B2- 5 787 614
- US-A1- 2019 299 314

## Beschreibung

Die Erfindung betrifft ein Lichtbogenschweißgerät mit einem Inverter-Leistungsteil, das zur Bereitstellung eines Ausgangsstroms zum Lichtbogenschweißen eingerichtet ist, und mit einer Steuereinheit, die zur Steuerung des Lichtbogenschweißgerätes eingerichtet ist, entsprechend dem Oberbegriff des Anspruchs 1 (siehe z.B. DE 10 2015 115267 A1). Die Erfindung betrifft weiterhin ein System mit einem solchen Lichtbogenschweißgerät sowie ein Verfahren, siehe Ansprüche 11 und 12.

Derartige Lichtbogenschweißgeräte werden als Schweißstromquellen zum Lichtbogenschweißen verwendet, insbesondere zum Lichtbogenhandschweißen (EN ISO 4063, Prozess 111), das auch als Elektroden-Handschweißen bezeichnet wird, zum Wolfram-Inertgas-Schweißen (EN ISO 4063, Prozesse 141 und 142) oder zum Metallschutzgasschweißen, insbesondere zum MIG/MAG-Schweißen (EN ISO 4063, Prozess 131). Beim Lichtbogenschweißen wird zwischen zwei Elektroden bzw. zwischen einer Elektrode und dem zu schweißenden Werkstück ein Lichtbogen erzeugt, der die für das Schweißen erforderliche Energie bereitstellt. Während des Schweißens wird dem Schmelzbad häufig ein Fülldraht zugeführt, durch den Material für die Schweißnaht zur Verfügung gestellt wird.

Das Lichtbogenschweißen wird unter anderem zum Verbinden von Werkstücken, insbesondere Bauteilen, eingesetzt, die neben mechanischen oder antikorrosiven Eigenschaften auch ästhetischen oder hygienischen Anforderungen unterliegen, wie zum Beispiel bei sichtbaren Bauteilen wie Geländern oder bei sauber zu haltenden Werkstücken wie Komponenten in Großküchen oder verfahrenstechnischen Anlagen. Derartige Werkstücke bestehen häufig aus Edelstahl.

Es sind verschiedene Reinigungsverfahren zur Reinigung von Schweißnähten an derartigen Werkstücken bekannt, wie zum Beispiel mechanische Oberflächenbehandlungen, chemische oder elektrochemische Oberflächenbehandlungen. Als besonders praktikabel hat sich eine elektrochemische Reinigung von Schweißnähten herausgestellt, für die spezielle Reinigungsgeräte entwickelt wurden, um die Reinigung durchzuführen. Für die Durchführung einer solchen elektrochemischen Reinigung wird eine typischerweise an einen Ende mit Filz versehene Reinigungselektrode an einem solchen Reinigungsgerät angeschlossen, das Filz mit einem flüssigen Elektrolyten getränkt und über die zu reinigende Schweißnaht an einem Werkstück geführt, während vom Reinigungsgerät ein Reinigungsstrom durch die Reinigungselektrode auf das Werkstück und von diesem zurück zum Reinigungsgerät geleitet wird.

Die Reinigung mittels eines solchen Reinigungsgeräts kann jedoch umständlich sein, insbesondere wenn das Reinigen direkt im Anschluss an einen Lichtbogenschweißvorgang durchgeführt werden soll.

Vor diesem Hintergrund liegt der vorliegenden Erfindung die Aufgabe zu Grunde, eine Vorrichtung zur Verfügung zu stellen, mit dem die Reinigung der Schweißnaht nach einem Schweißvorgang einfacher durchgeführt werden kann.

Diese Aufgabe wird bei einem Lichtbogenschweißgerät entsprechend Anspruch 1, mit einem Inverter-Leistungsteil, das zur Bereitstellung eines Ausgangsstroms zum Lichtbogenschweißen eingerichtet ist, und mit einer Steuereinheit, die zur Steuerung des Lichtbogenschweißgerätes eingerichtet ist, erfindungsgemäß dadurch gelöst, dass das Lichtbogenschweißgerät neben einer Schweißfunktion eine Schweißnahtreinigungsfunktion zur Verfügung stellt, wobei die Steuereinheit für die Schweißnahtreinigungsfunktion dazu eingerichtet ist, das Lichtbogenschweißgerät derart zu steuern, dass unter Verwendung des Inverter-Leistungsteils ein Ausgangsstrom zum Schweißnahtreinigen bereitgestellt wird, wobei die Ausgangsspannung des Lichtbogenschweißgeräts bei der Bereitstellung des Ausgangsstroms zum Schweißnahtreinigen auf eine Maximalspannung begrenzt wird. Vorzugsweise wird die Ausgangsspannung des Lichtbogenschweißgeräts bei der Bereitstellung des Ausgangsstroms zum Schweißnahtreinigen auf eine Maximalspannung von 20 V oder weniger, weiter bevorzugt von 15 V oder weniger, begrenzt. Auf diese Weise wird ein Gerät zur Verfügung gestellt, das sowohl zum Lichtbogenschweißen als auch zum Reinigen der beim Lichtbogenschweißen erzeugten Schweißnaht oder einer sonstigen Oberfläche eingerichtet ist.

Bei dem Inverter-Leistungsteil handelt es sich um eine elektronische Stromquelle zur Bereitstellung eines Schweißstroms. Vorzugsweise ist das Inverter-Leistungsteil dafür ausgelegt, Ausgangsströme von mehr als 100 A, weiter bevorzugt mehr als 200 A, insbesondere mehr als 400 A bereitstellen zu können.

Die Steuereinheit ist zur Steuerung des Lichtbogenschweißgeräts eingerichtet. Hierzu kann die Steuereinheit insbesondere zur Steuerung des Inverter-Leistungsteils und/oder weiterer Komponenten des Lichtbogenschweißgeräts, zum Beispiel eines Kommutators, eingerichtet sein. Die Steuereinheit kann einen Mikroprozessor sowie einen mit dem Mikroprozessor verbundenen Speicher aufweisen. Insbesondere kann der Speicher Befehle enthalten, deren Ausführung auf dem Mikroprozessor die Steuerung des Lichtbogenschweißgeräts bewirkt.

Das Lichtbogenschweißgerät weist eine Schweißfunktion auf. Hierunter wird verstanden, dass das Lichtbogenschweißgerät zum Lichtbogenschweißen eingesetzt werden kann. Zu diesem Zweck weist das Lichtbogenschweißgerät insbesondere elektrische Ausgänge zum Anschluss eines Elektroden- bzw. Schweißkabels und eines Massekabels auf, um den für das Lichtbogenschweißen erforderlichen Lichtbogenschweißstrom als Ausgangsstrom zur Verfügung zu stellen. Bei dem Lichtbogenschweißgerät kann es sich insbesondere um ein Lichtbogenschweißgerät zum Schweißen mit nichtabschmelzender Schweißelektrode, insbesondere zum Wolfram-Inertgas-Schweißen (WIG-Schweißen), handeln.

Zusätzlich weist das Lichtbogenschweißgerät noch eine Schweißnahtreinigungsfunktion auf. Es wurde erkannt, dass sich synergistische Vorteile ergeben, wenn eine Schweißnahtreinigungsfunktion direkt in ein Lichtbogenschweißgerät integriert wird, wodurch das Reinigen einer Schweißnaht vereinfacht wird. Indem das Inverter-Leistungsteil des Lichtbogenschweißgeräts neben der Bereitstellung des Schweißstroms auch zur Bereitstellung eines Ausgangsstroms zum Schweißnahtreinigen verwendet wird, kann insbesondere auf ein separates Reinigungsgerät zur Schweißnahtreinigung verzichtet werden. Dies ist zum einen kostengünstiger und zum anderen einfacher, da der Nutzer auf diese Weise nicht zwei separate Geräte bereithalten muss.

Während der Ausgangsstrom zum Lichtbogenschweißen bereitgestellt wird, um einen Lichtbogen zwischen Werkstück und Schweißbrenner zu erzeugen, soll beim Schweißnahtreinigen ein Zünden eines Lichtbogens beim Abheben der Reinigungselektrode von der zu reinigenden Schweißnaht bzw. vom zu reinigenden Werkstück verhindert werden, da es sonst zum Einbrand oder anderen Verunreinigungen, zu einer Beschädigung der Reinigungselektrode oder zu einer Beschädigung der zu reinigenden Oberfläche oder zu einer Gefährdung des Nutzers der Reinigungselektrode kommen kann.

Dies wird bei dem Lichtbogenschweißgerät dadurch erreicht, dass bei der Bereitstellung des Ausgangsstroms zum Schweißnahtreinigen die Ausgangsspannung des Lichtbogenschweißgeräts auf eine Maximalspannung von vorzugsweise 20 V oder weniger, weiter bevorzugt 15 V oder weniger, begrenzt wird. Auf diese Weise wird verhindert, dass die Ausgangsspannung des Lichtbogenschweißgeräts beim Schweißnahtreinigen, insbesondere beim Abheben der Reinigungselektrode, so weit ansteigt, das ein Lichtbogen zünden kann. Insbesondere ist die Maximalspannung vorzugsweise so gewählt, dass ein Zünden eines Lichtbogens beim Schweißnahtreinigen verhindert wird. Zu diesem Zweck beträgt die Maximalspannung vorzugsweise 20 V oder weniger, weiter bevorzugt 15 V oder weniger. Die Maximalspannung kann beispielsweise fest vorgegeben oder, zum Beispiel über eine Nutzerschnittstelle, einstellbar sein, beispielsweise innerhalb eines vorgegebenen Bereichs.

Zur Begrenzung der Ausgangsspannung auf die Maximalspannung umfasst die Steuereinheit vorzugsweise eine Spannungsregelung, die beim Bereitstellen des Ausgangsstroms zum Schweißnahtreinigen, d.h. wenn ein Ausgangsstrom zum Schweißnahtreinigen fließt, einem Ansteigen der Ausgangsspannung des Lichtbogenschweißgeräts über die Maximalspannung von vorzugsweise 20 V oder weniger, weiter bevorzugt 15 V oder weniger, entgegenwirkt. Auf diese Weise wird erreicht, dass die Ausgangsspannung des Lichtbogenschweißgeräts die Maximalspannung nicht oder jedenfalls nur kurzfristig, beispielsweise für maximal 0,5s, und/oder geringfügig, beispielsweise um maximal 20%, übersteigt.

Durch die Bereitstellung eines gesonderten Ausgangsstroms zum Schweißnahtreinigen mit begrenzter Ausgangsspannung wird mit dem Lichtbogenschweißgerät ein sauberer und sicherer Schweißnahtreinigungsbetrieb erreicht.

Solange bei der Schweißnahtreinigungsfunktion kein Ausgangsstrom bereitgestellt wird (Ausgangsstromstärke = 0 A), ist eine Begrenzung und/oder Regelung der Ausgangsspannung nicht notwendig und zumindest bei bestimmten Invertern auch gar nicht möglich. Insbesondere kann die Ausgangsspannung des Schweißgeräts zum Beispiel der Leerlaufspannung des Schweißgeräts, zum Beispiel im Bereich 60 - 100 V, entsprechen, solange kein Ausgangsstrom zum Schweißnahtreinigen bereitgestellt wird.

Bei dem Ausgangsstrom zum Schweißnahtreinigen kann es sich insbesondere um einen Gleichstrom handeln. Mit einem Gleichstrom als Schweißnahtreinigungsstrom lassen sich Verunreinigungen und insbesondere Verfärbungen an der Schweißnaht effektiv entfernten.

Die Bereitstellung des Ausgangsstroms zum Schweißnahtreinigen für die Schweißnahtreinigungsfunktion kann über dieselben elektrischen Ausgänge des Lichtbogenschweißgeräts erfolgen wie die Bereitstellung des Ausgangsstroms zum Lichtbogenschweißen für die Schweißfunktion.

Insbesondere kann das Lichtbogenschweißgerät einen ersten Ausgang zum wahlweisen Anschließen eines Schweißbrenners und einer Schweißnahtreinigungselektrode und einen zweiten Ausgang zum Anschließen eines Massekabels aufweisen. Das Massekabel dient zur Kontaktierung des Werkstücks, um den Stromkreis zu schließen.

Es ist ebenfalls denkbar, dass zwei erste Ausgänge vorgesehen sind, von denen vorzugsweise jeweils nur einer gleichzeitig beschaltet ist. Auf diese Weise können gleichzeitig ein Schweißbrenner und eine Schweißnahtreinigungselektrode an einen jeweiligen der zwei ersten Ausgänge angeschlossen sein, so dass ein Wechsel vom Schweißen zum Schweißnahtreinigen schneller erfolgen kann.

Die zuvor genannte Aufgabe wird weiterhin gelöst durch ein System entsprechend Anspruch 11, das System umfassend das zuvor beschriebene Lichtbogenschweißgerät oder eine Ausführungsform davon und eine an dem Lichtbogenschweißgeräts anschließbare Schweißnahtreinigungselektrode.

Die Schweißnahtreinigungselektrode weist insbesondere eine Elektrodenspitze, insbesondere mit einem saugfähigen Element, zum Beispiel aus Filz, oder mit Haltemitteln für ein saugfähiges Element, einen Handgriff und ein Kabel zum Anschluss an das Lichtbogenschweißgerät auf.

Weiterhin wird die zuvor genannte Aufgabe gelöst durch ein Verfahren zum Reinigen einer Schweißnaht mittels des zuvor beschriebenen Lichtbogenschweißgeräts oder mittels des zuvor beschriebenen Systems (siehe Anspruch 12), bei dem eine Schweißnahtreinigungselektrode und das Werkstück an einen jeweiligen Ausgang des Lichtbogenschweißgeräts angeschlossen werden, bei dem mit dem Lichtbogenschweißgerät ein Ausgangsstrom zum Schweißnahtreinigen bereitgestellt wird und bei dem die Schweißnahtreinigungselektrode über eine zu reinigende Schweißnaht geführt wird.

Im Folgenden werden verschiedene Ausführungsformen des Lichtbogenschweißgeräts, des Systems und des Verfahrens beschrieben, wobei die einzelnen Ausführungsformen sich unabhängig voneinander jeweils sowohl auf das Lichtbogenschweißgerät und das System, als auch auf das Verfahren anwenden lassen. Darüber hinaus können die verschiedenen Ausführungsformen untereinander beliebig kombiniert werden.

Bei einer Ausführungsform wird die Ausgangsspannung des Lichtbogenschweißgeräts bei der Bereitstellung des Ausgangsstroms zum Schweißnahtreinigen auf eine Maximalspannung im Bereich von 5 V - 20 V, vorzugsweise im Bereich von 8 V - 15 V begrenzt. Durch die Begrenzung der Ausgangsspannung bei der Bereitstellung des Ausgangsstroms zum Schweißnahtreinigen auf eine Maximalspannung in diesem Spannungsbereich wird eine effektive Reinigung gewährleistet und gleichzeitig das Entzünden eines Lichtbogens verhindert.

Bei einer Ausführungsform wird die Stromstärke des Ausgangsstroms zum Schweißnahtreinigen auf eine Maximalstromstärke von 25 A oder weniger, vorzugsweise 20 A oder weniger, begrenzt. Auf diese Weise werden eine übermäßige Beanspruchung der Schweißnahtreinigungselektrode und eine Beschädigung der zu reinigenden Oberfläche verhindert.

Bei einer weiteren Ausführungsform wird die Stromstärke des Ausgangsstroms zum Schweißnahtreinigen auf eine Maximalstromstärke im Bereich von 0 - 25 A, vorzugsweise 10 - 25 A, insbesondere 10 - 20 A, begrenzt. Durch eine Maximalstromstärke von 25 A, insbesondere 20 A wird eine Beschädigung der zu reinigenden Oberfläche und übermäßige Beanspruchung der Schweißnahtreinigungselektrode verhindert. Durch eine Maximalstromstärke von mindestens 10 A wird eine effektive Reinigung gewährleistet.

Bei einer weiteren Ausführungsform ist die Steuereinheit für die Schweißnahtreinigungsfunktion dazu eingerichtet, bei der Bereitstellung des Ausgangsstroms zum Schweißnahtreinigen eine Stromregelung des Ausgangsstroms zum Schweißnahtreinigen zu bewirken, wenn die Ausgangsspannung des Lichtbogenschweißgeräts unterhalb eines vorgegebenen oder vorgebbaren Stromregelungs-Schwellwertes liegt. Auf diese Weise kann bei der Nutzung der Schweißnahtreinigungsfunktion unterhalb des Stromregelungs-Schwellwerts für die Ausgangsspannung des Lichtbogenschweißgeräts gezielt eine für die Schweißnahtreinigung geeignete, insbesondere optimale, Stromstärke eingestellt werden. Vorzugsweise wird die Stromstärke des Ausgangsstroms bei der Stromregelung auf eine Reinigungsstromstärke im Bereich von 10 - 25 A, insbesondere 10 - 20 A, geregelt.

Entsprechend der Erfindung ist die Steuereinheit für die Schweißnahtreinigungsfunktion dazu eingerichtet, bei der Bereitstellung des Ausgangsstroms zum Schweißnahtreinigen eine Spannungsregelung der Ausgangsspannung des Lichtbogenschweißgeräts zu bewirken, wenn die Ausgangsspannung des Lichtbogenschweißgeräts oberhalb eines vorgegebenen oder vorgebbaren Spannungsregelungs-Schwellwertes liegt. Durch die Spannungsregelung oberhalb des Spannungsregelungs-Schwellwertes kann die Ausgangsspannung des Lichtbogenschweißgeräts bei der Nutzung der Schweißnahtreinigungsfunktion auf eine Maximalspannung begrenzt werden, um zuverlässig das Entzünden eines Lichtbogens beim Abheben der Schweißnahtreinigungselektrode zu verhindern. Der Spannungsregelungs-Schwellwert kann insbesondere kleiner sein als die Maximalspannung. Auf diese Weise kann die Spannungsregelung eingreifen, bevor die Maximalspannung erreicht wird. Es ist aber auch denkbar, dass der Spannungsregelungs-Schwellwert der Maximalspannung entspricht, auch wenn dies dazu führen kann, dass die Ausgangsspannung des Lichtbogenschweißgeräts die Maximalspannung kurzfristig, beispielsweise für bis zu 0,5s, und/oder geringfügig, beispielsweise um bis zu 20%, überschreitet, bevor die Spannungsregelung die Ausgangsspannung wieder auf die Maximalspannung oder auf einen Wert unterhalb der Maximalspannung absenkt.

Solange bei der Schweißnahtreinigungsfunktion kein Ausgangsstrom bereitgestellt wird (Ausgangsstromstärke = 0 A), ist eine Spannungsregelung der Ausgangsspannung nicht notwendig und zumindest bei bestimmten Invertern auch gar nicht möglich. Insbesondere kann die Ausgangsspannung des Schweißgeräts zum Beispiel der Leerlaufspannung des Schweißgeräts entsprechen, solange kein Ausgangsstrom zum Schweißnahtreinigen bereitgestellt wird.

Bei dem Stromregelungs-Schwellwert und dem Spannungsregelungs-Schwellwert kann es sich um zwei separat vorgegebene oder vorgebbare Schwellwerte handeln. Weiterhin ist es denkbar, dass es sich bei dem Stromregelungs-Schwellwert und dem Spannungsregelungs-Schwellwert um denselben vorgegebenen oder vorgebbaren Schwellwert handelt.

Bei einer Ausführungsform weist das Lichtbogenschweißgerät weiter einen Kommutator auf, der dazu eingerichtet ist, die Stromrichtung des Ausgangsstroms umzukehren. Auf diese Weise kann beispielsweise das Lichtbogenschweißgerät den Ausgangsstrom zum Lichtbogenschweißen und/oder den Ausgangsstrom zum Schweißnahtreinigen in Form eines Wechselstroms bereitstellen.

Auf diese Weise kann der Kommutator insbesondere sowohl für die Bereitstellung des Schweißstroms als Wechselstrom als auch für die Bereitstellung des Reinigungsstroms als Wechselstrom genutzt werden, so dass auf einen gesonderten zweiten Kommutator verzichtet werden kann.

Insbesondere kann die Steuereinheit für die Schweißnahtreinigungsfunktion dazu eingerichtet sein, das Lichtbogenschweißgerät derart zu steuern, dass unter Verwendung des Inverter-Leistungsteils und des Kommutators ein Wechselstrom als Ausgangsstrom zum Schweißnahtreinigen bereitgestellt wird.

Der Kommutator kann als mechanischer Kommutator oder als elektronischer Kommutator mit elektrischen Schaltern wie zum Beispiel IGBTs, FETs, BipolarTransistoren und/oder Thyristoren ausgebildet sein.

Die Frequenz, insbesondere Grundfrequenz, eines als Ausgangsstrom zum Schweißnahtreinigen bereitgestellten Wechselstroms liegt vorzugsweise im Bereich zwischen 20 - 200 Hz. Dieser Frequenzbereich hat sich als vorteilhaft für die Reinigungswirkung herausgestellt.

Bei einer weiteren Ausführungsform ist die Steuereinheit für die Schweißnahtreinigungsfunktion dazu eingerichtet, das Lichtbogenschweißgerät derart zu steuern, dass unter Verwendung des Inverter-Leistungsteils und des Kommutators als Ausgangsstrom zum Schweißnahtreinigen wahlweise ein Wechselstrom oder ein Gleichstrom bereitgestellt wird. Durch einen Wechselstrom und einen Gleichstrom werden unterschiedliche Reinigungswirkungen erzielt. Durch die wahlweise Bereitstellung eines Gleich- oder Wechselstroms kann der Nutzer auf beide Reinigungsarten zugreifen.

Bei einer Ausführungsform ist die Steuereinheit für die Schweißnahtreinigungsfunktion dazu eingerichtet ist, auf eine entsprechende Nutzereingabe eine Umpolung der Polarität eines als Ausgangsstrom zum Schweißnahtreinigen bereitgestellten Gleichstroms zu bewirken. Auf diese Weise kann die Schweißnahtreinigungselektrode wahlweise über den Minus- oder über den Pluspol betrieben werden, ohne dass ein Umstecken der Schweißnahtreinigungselektrode und des Massekabels erforderlich ist. Dies ist insbesondere deshalb vorteilhaft, da eine positiv gepolte Schweißnahtreinigungselektrode eine andere Reinigungswirkung hat als eine negativ gepolte Schweißnahtreinigungselektrode und auf diese Weise zwischen beiden Reinigungswirkungen ohne manuelles Umstecken gewechselt werden kann.

Für die Umpolung weist das Lichtbogen-Schweißgerät insbesondere einen Kommutator auf, der dazu eingerichtet ist, die Stromrichtung des Ausgangsstroms umzukehren und für die Umpolung verwendet wird.

Bei einer weiteren Ausführungsform weist das Lichtbogenschweißgerät eine Elektrolytbereitstellungseinrichtung zur Bereitstellung eines Elektrolyts für die Schweißnahtreinigungsfunktion auf. Auf diese Weise kann das für die Schweißnahtreinigung erforderlich Elektrolyt automatisch der Schweißnahtreinigungselektrode zugeführt werden, wodurch ein vereinfachter und kontinuierlicher Reinigungsvorgang ermöglicht wird.

Insbesondere kann die Steuereinheit für die Schweißnahtreinigungsfunktion dazu eingerichtet sein, das Lichtbogenschweißgerät derart zu steuern, dass mit der Elektrolytbereitstellungseinrichtung ein Elektrolyt bereitgestellt wird.

Die Elektrolytbereitstellungseinrichtung kann insbesondere ein Elektrolytreservoir aufweisen, das beispielsweise im Gehäuse des Lichtbogenschweißgeräts angeordnet sein kann. Auf diese Weise kann die Elektrolytflüssigkeit direkt im Lichtbogenschweißgerät bevorratet werden, ohne dass ein separater Behälter mit Elektrolyt bereitgestellt werden muss.

Die Elektrolytbereitstellungseinrichtung kann insbesondere eine Elektrolytfördereinrichtung, beispielsweise eine Pumpe, aufweisen. Vorzugsweise ist die Steuereinheit dazu eingerichtet, die Elektrolytfördereinrichtung für die Schweißnahtreinigungsfunktion anzusteuern. Auf diese Weise kann automatisch Elektrolyt zur Schweißnahtreinigungselektrode gefördert werden.

Bei einer weiteren Ausführungsform weist das Lichtbogenschweißgerät einen Elektrolyt-Anschluss zum Anschließen einer Elektrolytleitung auf, wobei die Elektrolytbereitstellungseinrichtung zur Bereitstellung eines Elektrolyts über den Elektrolyt-Anschluss eingerichtet ist. Auf diese Weise kann eine Elektrolytleitung für die Schweißnahtreinigungselektrode direkt am Lichtbogenschweißgerät angeschlossen werden, wodurch die Handhabung weiter vereinfacht wird.

Bei einer weiteren Ausführungsform weist das Lichtbogenschweißgerät eine Nutzerschnittstelle auf, die einem Nutzer Zugriff auf die Schweißnahtreinigungsfunktion erlaubt.

Zu diesem Zweck kann das Lichtbogenschweißgerät insbesondere ein Bedienteil aufweisen, so dass der Nutzer unmittelbar am Gerät auf die Schweißnahtreinigungsfunktion zugreifen kann. Über das Bedienteil kann der Nutzer vorzugsweise sowohl auf die Schweißfunktion als auch auf die Schweißnahtreinigungsfunktion zugreifen.

Zusätzlich oder alternativ kann das Lichtbogenschweißgerät auch eine Schnittstelle zum Anschluss eines optischen oder elektrischen Datenkabels wie zum Beispiel eine LAN-Schnittstelle oder eine USB-Schnittstelle aufweisen. Auch eine drahtlose Schnittstelle, wie zum Beispiel eine Bluetooth- oder WLAN-Schnittstelle ist denkbar. Über eine derartige Schnittstelle kann der Nutzer beispielsweise mittels eines separaten Bedienteils auf die Schweißnahtreinigungsfunktion und/oder auf die Schweißfunktion des Lichtbogenschweißgeräts zugreifen.

Bei einer weiteren Ausführungsform ist das Lichtbogenschweißgerät durch eine vordefinierte Nutzereingabe über die Nutzerschnittstelle von einem Schweißmodus in einen Schweißnahtreinigungsmodus umschaltbar, wobei im Schweißnahtreinigungsmodus die Schweißfunktion deaktiviert und die Schweißnahtreinigungsfunktion aktiviert ist. Zu diesem Zweck kann insbesondere die Steuereinheit dazu eingerichtet sein, das Lichtbogenschweißgerät bei einer vordefinierten Nutzereingabe über die Nutzerschnittstelle von einem Schweißmodus in einen Schweißnahtreinigungsmodus umzuschalten. Indem das Lichtbogenschweißgerät einen Schweißmodus und einen Schweißnahtreinigungsmodus aufweist, können die Schweißfunktion und die Schweißnahtreinigungsfunktion voneinander getrennt werden, so dass die Betriebssicherheit des Lichtbogenschweißgeräts erhöht wird. Insbesondere kann auf diese Weise verhindert werden, dass ein Nutzer während eines Schweißnahtreinigungsvorgangs versehentlich die Schweißfunktion startet und dadurch hohe Ströme und Spannungen an den Ausgängen des Lichtbogenschweißgeräts anliegen, wodurch es beispielsweise zur Entzündung von Lichtbögen zwischen Schweißnahtreinigungselektrode und Werkstück kommen könnte.

Im Schweißmodus ist vorzugsweise die Schweißfunktion aktiviert und die Schweißnahtreinigungsfunktion deaktiviert.

Das Umschalten zwischen dem Schweißmodus und dem Schweißnahtreinigungsmodus kann rein elektronisch erfolgen, beispielsweise indem die Steuereinheit einer in einem Speicher gespeicherten Modus-Variablen einen bestimmten Wert zuweist, oder auch zumindest teilweise mechanisch, indem ein mechanischer Schalter betätigt wird.

Die Steuereinheit kann zum Beispiel dazu eingerichtet sein, das Lichtbogenschweißgerät mit dem Umschalten in den Schweißnahtreinigungsmodus, ggf. nach Ablauf einer vorgegebenen Verzögerungszeitdauer, in Bereitschaft zu versetzen, den Ausgangsstrom zum Schweißnahtreinigen bereitzustellen. Die Steuereinheit kann auch dazu eingerichtet sein, das Lichtbogenschweißgerät im Schweißnahtreinigungsmodus erst nach einer weiteren vordefinierten Nutzereingabe über die Nutzerschnittstelle in Bereitschaft zu versetzen, den Ausgangsstrom zum Schweißnahtreinigen bereitzustellen. Wenn das Lichtbogenschweißgerät in Bereitschaft zur Bereitstellung des Ausgangsstroms versetzt ist, startet die Bereitstellung des Ausgangsstroms vorzugsweise, sobald der Nutzer die Schweißnahtreinigungselektrode auf das zu reinigende Werkstück aufsetzt.

Weist das Lichtbogenschweißgerät zwei erste Ausgänge auf, so wird vorzugsweise einer der zwei ersten Ausgänge im Schweißmodus und der andere der zwei ersten Ausgänge im Schweißnahtreinigungsmodus beschaltet. Dadurch wird ein an den einen der zwei ersten Ausgänge angeschlossener Schweißbrenner im Schweißmodus, nicht aber im Schweißnahtreinigungsmodus und eine an den anderen der zwei ersten Ausgänge angeschlossene Schweißnahtreinigungselektrode im Schweißnahtreinigungsmodus, nicht aber im Schweißmodus mit Ausgangsstrom beaufschlagt.

Weitere Merkmale und Vorteile der Erfindung können der nachfolgenden Beschreibung von Ausführungsbeispielen entnommen werden, wobei auf die beigefügte Zeichnung Bezug genommen wird.

In der Zeichnung zeigen
- Fig. 1: ein Ausführungsbeispiel des Lichtbogenschweißgeräts und des Systems,
- Fig. 2: ein Beispiel für ein Bedienteil des Lichtbogenschweißgeräts aus Fig. 1,
- Fig. 3: ein weiteres Ausführungsbeispiel des Lichtbogenschweißgeräts und des Systems,
- Fig. 4: ein Ausführungsbeispiel des Verfahrens mit dem System aus Fig. 1 oder Fig. 2 und
- Fig. 5: ein weiteres Ausführungsbeispiel des Verfahrens mit dem System aus Fig. 1 oder 2.

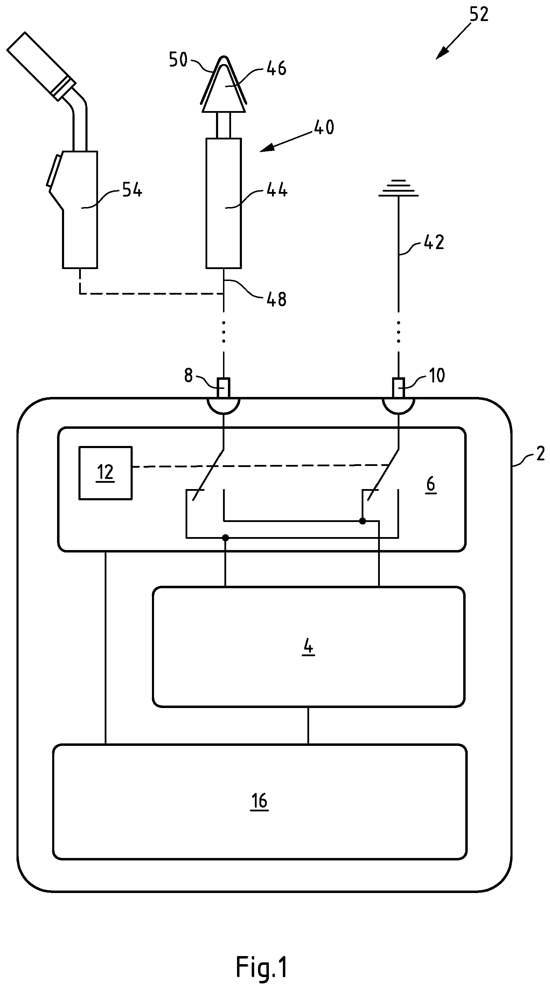

Fig. 1 zeigt ein Lichtbogenschweißgerät 2 mit einem Inverter-Leistungsteil 4 und einem Kommutator 6. Das Inverter-Leistungsteil 4 ist dazu eingerichtet, über einen ersten elektrischen Ausgang 8 und einen zweiten elektrischen Ausgang 10 des Lichtbogenschweißgeräts 2 einen Ausgangsstrom bereitzustellen, insbesondere einen Schweißstrom zum Lichtbogenschweißen. Für das Lichtbogenschweißen können entsprechende Elektroden- bzw. Schweißkabel an die Ausgänge 8, 10 des Lichtbogenschweißgeräts 2 angeschlossen werden.

Mit dem Kommutator 6 kann die Stromrichtung des Ausgangsstroms umgekehrt werden. Hierzu kann der Kommutator 6 mechanische Schalter, wie zum Beispiel Relais, aufweisen, die mittels einer Steuerelektronik 12 geschaltet werden können. Alternativ kann der Kommutator 6 auch elektronische Schalter wie zum Beispiel IGBTs oder FETs aufweisen. In einem alternativen Ausführungsbeispiel kann der Kommutator auch entfallen, beispielsweise wenn es bei dem Lichtbogenschweißgerät um ein DC-WIG-Lichtbogenschweißgerät handelt. In diesem Fall wird der Ausgangsstrom in Form eines Gleichstroms bereitgestellt.

Das Lichtbogenschweißgerät 2 umfasst weiterhin eine Steuereinheit 16, die zur Steuerung des Lichtbogenschweißgeräts 2 eingerichtet ist, insbesondere zur Steuerung des Inverter-Leistungsteils 4 und des Kommutators 6. Beispielsweise kann die Steuereinheit 16 einen Mikroprozessor und einen damit verbundenen Speicher aufweisen, wobei der Speicher zum Beispiel Steuerungsbefehle und -parameter für einen Schweißvorgang beinhalten kann.

Neben einer Schweißfunktion umfasst das Lichtbogenschweißgerät 2 weiterhin auch eine Schweißnahtreinigungsfunktion, um Schweißnähte zu reinigen. Zu diesem Zweck ist die Steuereinheit 16 dazu eingerichtet, das Lichtbogenschweißgerät derart zu steuern, dass unter Verwendung des Inverter-Leistungsteils 4 über die Ausgänge 8 und 10 ein Ausgangsstrom zum Schweißnahtreinigen bereitgestellt wird, wobei die Ausgangsspannung des Lichtbogenschweißgeräts 2 bei der Bereitstellung des Ausgangsstroms auf eine Maximalspannung, vorzugsweise auf eine Maximalspannung von 20 V oder weniger, weiter bevorzugt auf eine Maximalspannung von 15 V oder weniger, begrenzt wird.

Um die Ausgangsspannung des Lichtbogenschweißgeräts beim Schweißnahtreinigen zu begrenzen, umfasst die Steuereinheit 16 eine kombinierte Strom- und Spannungsregelung. Bei der Bereitstellung des Ausgangsstroms zum Schweißnahtreinigen regelt die kombinierte Strom- und Spannungsregelung unterhalb einer vorgegebenen Schwellwertspannung die Stromstärke des Ausgangsstroms zur Schweißnahtreinigung, vorzugsweise auf eine vorgegebene oder vorgebbare Reinigungsstromstärke im Bereich bis 25 A, vorzugsweise zwischen 10 und 20 A. Wenn die Ausgangsspannung des Schweißgeräts bei der Bereitstellung des Ausgangsstroms zum Schweißnahtreinigen die Schwellwertspannung erreicht oder übersteigt, wird von der Strom- auf eine Spannungsregelung der Ausgangsspannung des Lichtbogenschweißgeräts umgeschaltet, durch die die Ausgangsspannung des Lichtbogenschweißgeräts beim Schweißnahtreinigen auf eine Maximalspannung von vorzugsweise 20 V oder weniger begrenzt wird.

Der Ausgangsstrom zum Schweißnahtreinigen kann insbesondere in Form eines Gleichstroms oder, durch entsprechendes Schalten des Kommutators 6, in Form eines Wechselstroms bereitgestellt werden.

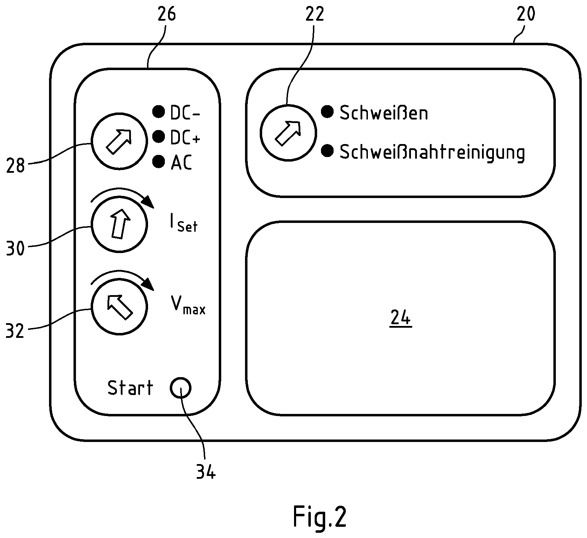

Zur Bedienung des Lichtbogenschweißgeräts 2 kann dies eine mit der Steuereinheit 16 verbundene Nutzerschnittstelle aufweisen, wie zum Beispiel die in Fig. 2 in Form eines Bedienteils schematisch dargestellte Nutzerschnittstelle 20.

Die Nutzerschnittstelle 20 umfasst ein Bedienelement 22 in Form eines Drehknopfs, mit dem das Lichtbogenschweißgerät 2 zwischen einem Schweißmodus (in Fig. 2: "Schweißen") und einem Schweißnahtreinigungsmodus (in Fig. 2: "Schweißnahtreinigung") umgeschaltet werden kann. Die Steuereinheit 16 steuert das Lichtbogenschweißgerät 2 derart, dass im Schweißmodus die Schweißfunktion aktiviert und die Schweißnahtreinigungsfunktion deaktiviert und dass im Schweißnahtreinigungsmodus die Schweißfunktion deaktiviert und die Schweißnahtreinigungsfunktion aktiviert ist.

Die Nutzerschnittstelle 20 weist in einem ersten Feld 24 Bedienelemente (nicht dargestellt) auf, welche die Schweißfunktion betreffen. Weiterhin weist die Nutzerschnittstelle 20 in einem zweiten Feld 26 Bedienelemente auf, die die Schweißnahtreinigungsfunktion betreffen. Beispielsweise kann ein Drehknopf 28 vorgesehen sein, mit denen ein Nutzer zwischen einem Gleichstrom (DC) oder einem Wechselstrom (AC) als Ausgangsstrom zum Schweißnahtreinigen wählen kann. Im vorliegenden Beispiel kann der Nutzer zudem zwischen zwei verschiedenen Gleichstrom-Einstellungen (DC-, DC+) wählen, die sich durch eine vertauschte Polarität an den Ausgängen 8, 10 unterscheiden. Weiterhin können beispielsweise Bedienelemente 30, 32 vorgesehen sein, mit denen ein Nutzer weitere Parameter der Schweißnahtreinigungsfunktion einstellen kann, wie zum Beispiel den Wert der Reinigungsstromstärke (I_{Set}) für die Stromregelung oder die Maximalspannung (Vₘₐₓ), auf die die Ausgangsspannung des Lichtbogenschweißgeräts 2 im Schweißnahtreinigungsmodus begrenzt wird. Weiterhin kann ein Bedienelement 34 vorgesehen sein, mit dem ein Nutzer die Bereitschaft des Lichtbogenschweißgeräts 2 zur Bereitstellung des Ausgangsstroms zum Schweißnahtreinigen starten und optional stoppen kann (Start).

Um die Schweißnahtreinigungsfunktion des Lichtbogenschweißgeräts 2 zu nutzen, schließt der Nutzer an einen der Ausgänge 8, 10 eine Schweißnahtreinigungselektrode 40 und an den jeweiligen anderen der Ausgänge 8, 10 ein Massekabel 42, mit dem das Werkstück kontaktiert wird, dessen Schweißnaht gereinigt werden soll.

Die Schweißnahtreinigungselektrode 40 weist wie in Fig. 1 dargestellt einen Handgriff 44, eine Elektrodenspitze 46 und eine Leitung 48 zum Anschließen der Schweißnahtreinigungselektrode 40 am Lichtbogenschweißgerät 2 auf. An der Elektrodenspitze 46 ist oder wird ein saugfähiges Element 50, beispielsweise ein Filzstück, befestigt, das für den Schweißnahtreinigungsvorgang mit einem flüssigen Elektrolyten getränkt wird.

Der Nutzer kann dann den Schweißnahtreinigungsvorgang starten, indem er das Lichtbogenschweißgerät 2 über das Bedienelement 22 in den Schweißnahtreinigungsmodus versetzt und, ggf. nach weiteren Einstellungen an den Bedienelementen im zweiten Feld 26, durch Drücken des Bedienelements 34 das Lichtbogenschweißgerät 2 in Bereitschaft versetzt, den Ausgangsstrom zum Schweißnahtreinigen bereitzustellen. Sobald der Nutzer die Schweißnahtreinigungselektrode 40 mit dem saugfähigen Element 50 auf das Werkstück aufsetzt und über die zu reinigende Schweißnaht führt, stellt das Lichtbogenschweißgerät 2 denn Ausgangsstrom zum Schweißnahtreinigen bereit, so dass die Schweißnaht gereinigt wird.

Die Stromregelung durch die Steuereinheit 16 regelt während der Bereitstellung des Ausgangsstroms zum Scheißnahtreinigen die Stromstärke auf die mit dem Bedienelement 30 eingestellte Reinigungsstromstärke I_{Set} ein. Wenn bei der Bereitstellung des Ausgangsstroms dessen Spannung, beispielsweise durch das Abheben der Schweißnahtreinigungselektrode 40 von der Schweißnaht, so weit ansteigt, dass sie einen vorgegebenen oder vorgebbaren Strom-/Spannungsregelungs-Schwellwert erreicht oder überschreitet, beispielsweise die über das Bedienelement 32 eingestellte Maximalspannung Vₘₐₓ oder eine für diesen Zweck in einem Speicher hinterlegte Maximalspannung, so stellt die Steuereinheit 16 auf eine Spannungsregelung um, die einem Ansteigen der Ausgangsspannung des Lichtbogenschweißgeräts über eine Maximalspannung von vorzugsweise 20 V oder weniger, weiter bevorzugt 15 V oder weniger, beispielsweise die über das Bedienelement 32 eingestellte Maximalspannung Vₘₐₓ, entgegenwirkt. Auf diese Weise wird verhindert, dass beim Abheben der Schweißnahtreinigungselektrode 40 von der Schweißnaht ein Lichtbogen zwischen Schweißnahtreinigungselektrode 40 und Werkstück zündet.

Das Lichtbogenschweißgerät 2 und die Schweißnahtreinigungselektrode 40 stellen zusammen ein System 52 zur Schweißnahtreinigung dar.

Indem das Lichtbogenschweißgerät 2 über eine Schweißnahtreinigungsfunktion verfügt, ist ein separates Reinigungsgerät zum Schweißnahtreinigen entbehrlich. Insbesondere kann dasselbe Inverter-Leistungsteil 4 sowohl zum Bereitstellen eines Schweißstroms zum Schweißen als auch zum Bereitstellen eines Schweißnahtreinigungsstroms zum Schweißnahtreinigen verwendet werden.

Weiterhin erlaubt das Lichtbogenschweißgerät 2 schnelle Wechsel zwischen dem Schweißen und Reinigen.

Um einen Schweißvorgang durchzuführen, schließt der Nutzer einen Schweißbrenner 54 an das Lichtbogenschweißgerät an, kontaktiert das Werkstück mit dem Massekabel 42 und schaltet das Lichtbogenschweißgerät 2 über das Bedienelement 22 in den Schweißmodus.

Nach Beendigung des Schweißvorgangs muss er lediglich den Schweißbrenner 54 gegen die Schweißnahtreinigungselektrode 40 tauschen und das Lichtbogenschweißgerät 2 über das Bedienelement 22 in den Schweißnahtreinigungsmodus schalten, um die zuvor hergestellte Schweißnaht oder eine sonstige Oberfläche zu reinigen. Ein erneutes Verbinden des Massekabels 42 kann unterbleiben, da dieses bereits vom Schweißvorgang mit dem Werkstück verbunden ist.

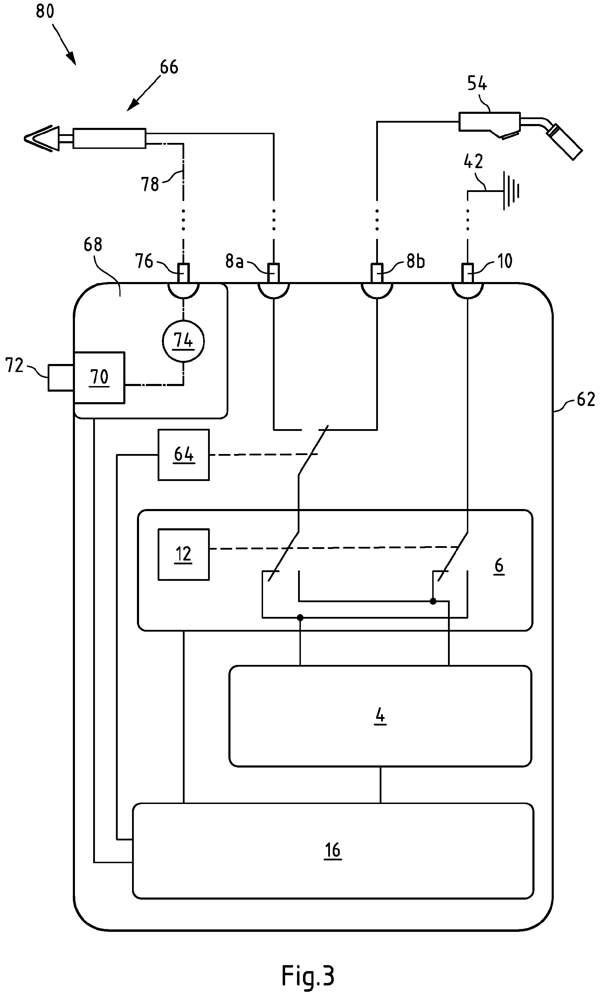

Fig. 3 zeigt ein weiteres Ausführungsbeispiel des Lichtbogenschweißgeräts. Das Lichtbogenschweißgerät 62 weist einen ähnlichen Aufbau und eine ähnliche Funktionsweise auf wie das Lichtbogenschweißgerät 2, wobei einander entsprechende Komponenten mit denselben Bezugszeichen versehen sind und insoweit auf die obige Beschreibung zum Lichtbogenschweißgerät 2 Bezug genommen wird.

Das Lichtbogenschweißgerät 62 unterscheidet sich dadurch vom Lichtbogenschweißgerät 2, dass zwei erste Ausgänge 8a, 8b vorgesehen sind, die über ein Relais 64 oder einen Halbleiterschalter, wie zum Beispiel FET oder IGBT, wechselweise beschaltet werden. Die Steuereinheit 16 ist dazu eingerichtet, im Schweißnahtreinigungsmodus den Ausgang 8a zum Anschluss einer Schweißnahtreinigungselektrode und im Schweißmodus den Ausgang 8b zum Anschluss eines Schweißbrenners 54 zu beschalten, so dass der Ausgangsstrom im Schweißnahtreinigungsmodus über die Ausgänge 8a und 10 und im Schweißmodus über die Ausgänge 8b und 10 bereitgestellt wird. Auf diese Weise können die Schweißnahtreinigungselektrode 66 während des Schweißvorgangs und der Schweißbrenner 54 während des Schweißnahtreinigungsvorgangs gefahrenfrei am Lichtbogenschweißgerät 2 angeschlossen bleiben, wodurch ein schnellerer Wechsel zwischen Schweiß- und Schweißnahtreinigungsvorgang erreicht werden kann.

Zum Umschalten zwischen dem Schweißmodus und dem Schweißnahtreinigungsmodus kann das Lichtbogenschweißgerät 62 eine Nutzerschnittstelle wie die in Fig. 2 dargestellte Nutzerschnittstelle 20 aufweisen.

Das Lichtbogenschweißgerät 62 unterscheidet sich weiter dadurch vom Lichtbogenschweißgerät 2, dass das Lichtbogenschweißgerät 62 eine Elektrolytbereitstellungseinrichtung 68 mit einem im Gehäuse des Lichtbogenschweißgeräts 62 untergebrachten Elektrolytreservoir 70 mit einem außen am Gehäuse angeordneten Nachfüllstutzen 72, eine Elektrolytfördereinrichtung 74 in Form einer Pumpe sowie einen Elektrolyt-Anschluss 76 zum Anschließen einer Elektrolytleitung 78 der Schweißnahtreinigungselektrode 66 aufweist. Die Steuereinheit 16 ist dazu eingerichtet, während des Schweißnahtreinigungsvorgangs die Bereitstellung von Elektrolytflüssigkeit über den Elektrolyt-Anschluss 76 durch Ansteuerung der Pumpe 74 zu bewirken, so dass die Schweißnahtreinigungselektrode 66 mit Elektrolyt versorgt wird. Zur Steuerung der Elektrolytbereitstellungseinrichtung 68 können an der Nutzerschnittstelle 20 des Lichtbogenschweißgeräts 62 zusätzliche, in Fig. 2 nicht dargestellte Bedienelemente vorgesehen sein, beispielsweise um den Elektrolytdurchsatz einzustellen.

Das Lichtbogenschweißgerät 62 und die Schweißnahtreinigungselektrode 66 bilden ein System 80.

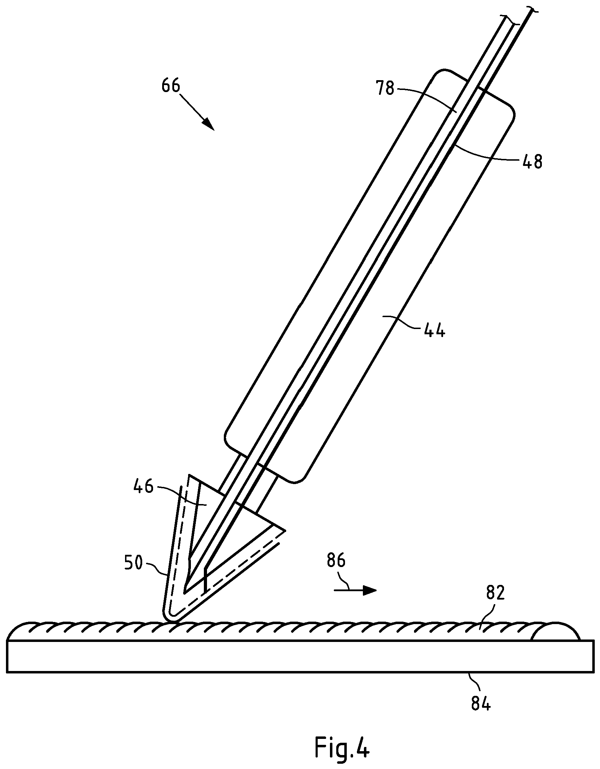

Fig. 4 zeigt die Schweißnahtreinigungselektrode 66 während eines laufenden Schweißnahtreinigungsvorgangs einer Schweißnaht 82 an einem Werkstück 84. Die Schweißnahtreinigungselektrode 66 weist wie die Schweißnahtreinigungselektrode 66 einen Handgriff 44, eine Elektrodenspitze 46 und eine Leitung 48 zum Anschließen der Schweißnahtreinigungselektrode 40 am Lichtbogenschweißgerät 2 auf. Weiterhin ist an der Elektrodenspitze 46 ein saugfähiges Element 50, beispielsweise ein Filzstück, befestigt oder befestigbar. Darüber hinaus weist die Schweißnahtreinigungselektrode 66 die an den Elektrolyt-Anschluss 76 anschließbare Elektrolyt-Leitung 78 auf, mit der die vom Lichtbogenschweißgerät 2 bereitgestellte Elektrolytflüssigkeit an der Elektrodenspitze 46 auf das Filzstück 50 aufgebracht werden kann, so dass dieses während des Schweißnahtreinigungsprozesses ausreichend mit Elektrolyt getränkt ist.

Die Schweißnahtreinigungselektrode 66 wird während des Schweißnahtreinigungsvorgangs über die Schweißnaht 82 geführt (Pfeil 86), so dass diese durch die über den von der Schweißnahtreinigungselektrode 66 durch den Elektrolyt im Filz auf die Schweißnaht 82 fließenden Ausgangsstrom des Lichtbogenschweißgeräts gereinigt wird.

Wird die Schweißnahtreinigungselektrode 66 während der Bereitstellung des Ausgangsstroms zum Schweißnahtreinigen von der Schweißnaht 82 abgehoben, vergrößert sich der elektrische Widerstand zwischen Schweißnahtreinigungselektrode 66 und Schweißnaht 82, wodurch die Spannung ansteigt. Die Steuereinheit 16 des Lichtbogenschweißgeräts 62 stellt von einer Stromauf eine Spannungsregelung um, wenn die Ausgangsspannung einen bestimmten Schwellwert erreicht oder überschreitet, so dass die maximale Ausgangsspannung des Lichtbogenschweißgeräts auf eine Maximalspannung begrenzt und ein Zünden eines Lichtbogens verhindert wird.

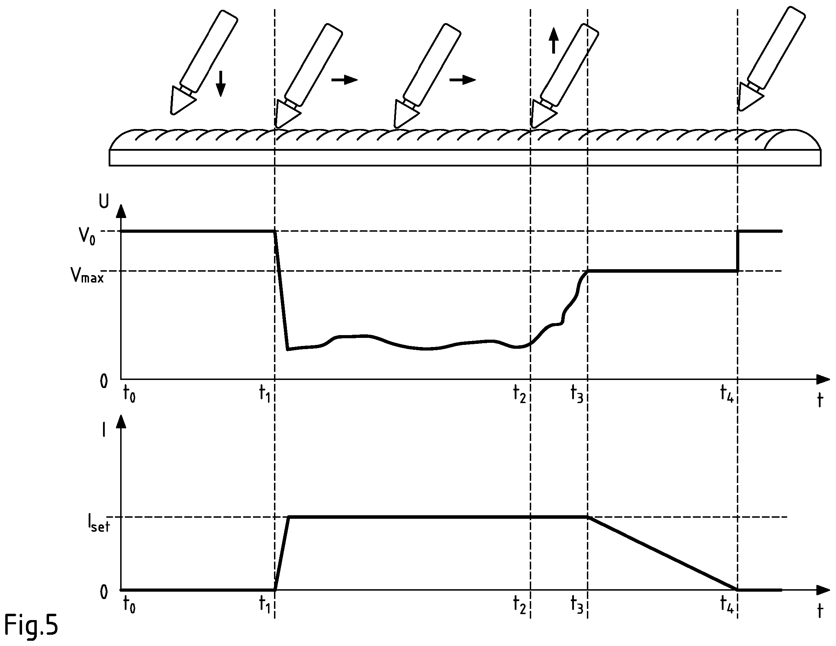

Fig. 5 zeigt einen exemplarischen Verlauf der Ausgangsspannung U und des Ausgangsstroms I des Lichtbogenschweißgeräts 2 aus Fig. 1 oder des Lichtbogenschweißgeräts 62 aus Fig. 3, während einer Schweißnahtreinigung. Zur Vorbereitung der Schweißnahtreinigung wird eine Schweißnahtreinigungselektrode, beispielsweise die Schweißnahtreinigungselektrode 40 aus Fig. 1 oder die Schweißnahtreinigungselektrode 66 aus Fig. 3 an das Lichtbogenschweißgerät 2 bzw. 62 angeschlossen und das Lichtbogenschweißgerät 2 bzw. 62 in den Schweißnahtreinigungsmodus versetzt, zum Beispiel über das Bedienelement 22 an der Nutzerschnittstelle 20.

Zum Zeitpunkt t₀ wird das Lichtbogenschweißgerät 2 in Bereitschaft versetzt, den Ausgangsstrom zum Schweißnahtreinigen bereitzustellen, zum Beispiel durch Drücken des Bedienelements 34 oder automatisch beim Umschalten in den Schweißnahtreinigungsmodus, ggf. auch nach Ablauf einer bestimmten Zeitdauer nach dem Umschalten.

Da im vorliegenden Beispiel die Schweißnahtreinigungselektrode zum Zeitpunkt t₀ noch nicht mit dem Werkstück in Kontakt steht, ist der elektrische Widerstand zwischen Schweißnahtreinigungselektrode und Werkstück praktisch unendlich groß, so dass noch kein Ausgangsstrom zum Schweißnahtreinigen bereitgestellt wird (I = 0A). Die Ausgangsspannung des Lichtbogenschweißgeräts kann zu diesem Zeitpunkt beispielsweise der Leerlaufspannung V₀ des Lichtbogenschweißgeräts entsprechen.

Zum Zeitpunkt t₁ kontaktiert die Schweißnahtreinigungselektrode das Werkstück, so dass der Widerstand zwischen Schweißnahtreinigungselektrode und Werkstück auf einen geringen Wert abfällt und ein Ausgangsstrom zum Schweißnahtreinigen bereitgestellt werden kann. Wie in Fig. 5 ersichtlich, fällt entsprechend die Ausgangsspannung des Lichtbogenschweißgeräts bei der Kontaktierung auf einen geringen Wert ab, während die Ausgangsstromstärke ansteigt.

Sobald zum Zeitpunkt t₁ der Ausgangsstrom zum Schweißnahtreinigen bereitgestellt wird (I > 0A), beginnt die Steuereinheit eine Stromregelung, um den Ausgangsstrom auf die eingestellte Reinigungsstromstärke I_{Set} zu regeln.

Zwischen dem Zeitpunkt t₁ und dem Zeitpunkt t₂ wird die Schweißnahtreinigungselektrode an der Schweißnaht über das Werkstück verfahren, während der Ausgangsstrom zum Schweißnahtreinigen fließt. Etwaige Schwankungen im elektrischen Widerstand zwischen Schweißnahtreinigungselektrode und Werkstück werden durch die Stromregelung unter Anpassung der Ausgangsspannung ausgeglichen, so dass die Stromstärke des Ausgangsstroms zum Schweißnahtreinigen möglichst konstant bleibt und auf diese Weise eine gleichmäßige Schweißnahtreinigung erreicht wird.

Zum Zeitpunkt t₂ beginnt der Nutzer, absichtlich oder unabsichtlich, die Schweißnahtreinigungselektrode von dem Werkstück abzuheben. Dies führt zu einem Anstieg des Widerstands zwischen Schweißnahtreinigungselektrode und Werkstück, so dass die Ausgangsspannung des Lichtbogenschweißgeräts ansteigt.

Zum Zeitpunkt t₃ erreicht oder überschreitet die Ausgangsspannung des Lichtbogenschweißgeräts die Maximalspannung Vₘₐₓ, so dass die Steuereinheit auf eine Spannungsregelung umschaltet und die Ausgangsspannung dadurch an einem weiteren Spannungsanstieg gehindert wird. Auf diese Weise wird erreicht, dass die Ausgangsspannung des Lichtbogenschweißgeräts bei der Bereitstellung des Ausgangsstroms zum Schweißnahtreinigen, insbesondere beim Abheben der Schweißnahtreinigungselektrode vom Werkstück, begrenzt wird, so dass das Zünden eines Lichtbogens zwischen Schweißnahtreinigungselektrode und Werkstück unterbunden wird. Die Spannungsregelung führt bei steigendem Widerstand zwischen Schweißnahtreinigungselektrode und Werkstück zu einem Absinken der Ausgangsstromstärke.

Setzt der Nutzer die Schweißnahtreinigungselektrode nun wieder auf das Werkstück auf und sinkt die Ausgangsspannung dadurch wieder unter Vₘₐₓ oder einen anderen vorgegebenen oder vorgebbaren Stromregelungs-Schwellwert ab, so schaltet die Steuereinheit wieder auf eine Stromregelung um. Auf diese Weise kann die Schweißnahtreinigung fortgesetzt werden.

Zieht der Nutzer die Schweißnahtreinigungselektrode jedoch weiter vom Werkstück ab - wie es im Beispiel aus Fig. 5 der Fall ist - so sinkt die Ausgangsstromstärke immer weiter ab, bis sie zum Zeitpunkt t₄ auf Null abgesunken ist, wodurch die Bereitstellung des Ausgangsstroms zum Schweißnahtreinigen beendet ist. Die Ausgangsspannung des Lichtbogenschweißgeräts kann zu diesem Zeitpunkt wie in Fig. 5 dargestellt zum Beispiel wieder auf die Leerlaufspannung V₀ des Lichtbogenschweißgeräts ansteigen.

Die Bereitschaft des Lichtbogenschweißgeräts zur Bereitstellung des Ausgangsstroms zum Schweißnahtreinigen kann nach dem Zeitpunkt t₄ fortdauern, so dass bei erneutem Aufsetzen der Schweißnahtreinigungselektrode auf das Werkstück wieder ein Ausgangsstrom zum Schweißnahtreinigen bereitgestellt wird.

Die Bereitschaft des Lichtbogenschweißgeräts zur Bereitstellung des Ausgangsstroms zum Schweißnahtreinigen kann zum Beispiel nach erneutem Drücken des Bedienelements 34 oder automatisch nach einer vorgegebenen oder vorgebbaren Zeitdauer nach Abfall des Schweißstroms auf Null enden. Alternativ kann die Bereitschaft des Lichtbogenschweißgeräts zur Bereitstellung des Ausgangsstroms zum Schweißnahtreinigen auch automatisch zum Zeitpunkt t₄ enden.

## Patentansprüche

1. Lichtbogenschweißgerät (2, 62)
- mit einem Inverter-Leistungsteil (4), das zur Bereitstellung eines Ausgangsstroms zum Lichtbogenschweißen eingerichtet ist, und
- mit einer Steuereinheit (16), die zur Steuerung des Lichtbogenschweißgerätes (2, 62) eingerichtet ist,
- wobei das Lichtbogenschweißgerät (2, 62) neben einer Schweißfunktion eine Schweißnahtreinigungsfunktion zur Verfügung stellt, wobei die Steuereinheit (16) für die Schweißnahtreinigungsfunktion dazu eingerichtet ist, das Lichtbogenschweißgerät (2, 62) derart zu steuern, dass unter Verwendung des Inverter-Leistungsteils (4) ein Ausgangsstrom zum Schweißnahtreinigen bereitgestellt wird, wobei die Ausgangsspannung des Lichtbogenschweißgeräts bei der Bereitstellung des Ausgangsstroms zum Schweißnahtreinigen auf eine Maximalspannung, vorzugsweise von 20 V oder weniger, weiter bevorzugt von 15 V oder weniger, begrenzt wird,
**dadurch gekennzeichnet,**
- **dass** die Steuereinheit (16) für die Schweißnahtreinigungsfunktion dazu eingerichtet ist, bei der Bereitstellung des Ausgangsstroms zum Schweißnahtreinigen eine Spannungsregelung der Ausgangsspannung des Lichtbogenschweißgeräts zu bewirken, wenn die Ausgangsspannung des Lichtbogenschweißgeräts oberhalb eines vorgegebenen oder vorgebbaren Spannungsregelungs-Schwellwertes liegt.

2. Lichtbogenschweißgerät nach Anspruch 1,
**dadurch gekennzeichnet, dass** die Ausgangsspannung des Lichtbogenschweißgeräts bei der Bereitstellung des Ausgangsstroms zum Schweißnahtreinigen auf eine Maximalspannung im Bereich von 5 V - 20 V, vorzugsweise 8 V - 15 V, begrenzt wird.

3. Lichtbogenschweißgerät nach Anspruch 1 oder 2,
**dadurch gekennzeichnet, dass** die Stromstärke des Ausgangsstroms zum Schweißnahtreinigen auf eine Maximalstromstärke von 25 A oder weniger, vorzugsweise 20 A oder weniger, begrenzt wird.

4. Lichtbogenschweißgerät nach einem der Ansprüche 1 bis 3,
**dadurch gekennzeichnet, dass** die Stromstärke des Ausgangsstroms zum Schweißnahtreinigen auf eine Maximalstromstärke im Bereich von 10 - 20 A begrenzt wird.

5. Lichtbogenschweißgerät nach einem der Ansprüche 1 bis 4,
**dadurch gekennzeichnet, dass** die Steuereinheit (16) für die Schweißnahtreinigungsfunktion dazu eingerichtet ist, bei der Bereitstellung des Ausgangsstroms zum Schweißnahtreinigen eine Stromregelung des Ausgangsstroms zum Schweißnahtreinigen zu bewirken, wenn die Ausgangsspannung des Lichtbogenschweißgeräts unterhalb eines vorgegebenen oder vorgebbaren Stromregelungs-Schwellwertes liegt.

6. Lichtbogenschweißgerät nach einem der Ansprüche 1 bis 5,
**dadurch gekennzeichnet, dass** das Lichtbogenschweißgerät (2, 62) weiter einen Kommutator (6) aufweist, der dazu eingerichtet ist, die Stromrichtung des Ausgangsstroms umzukehren, und dass die Steuereinheit (16) für die Schweißnahtreinigungsfunktion dazu eingerichtet ist, das Lichtbogenschweißgerät (2, 62) derart zu steuern, dass unter Verwendung des Kommutators (6) als Ausgangsstrom zum Schweißnahtreinigen ein Wechselstrom bereitgestellt wird.

7. Lichtbogenschweißgerät nach Anspruch 6,
**dadurch gekennzeichnet, dass** die Steuereinheit (16) für die Schweißnahtreinigungsfunktion dazu eingerichtet ist, das Lichtbogenschweißgerät (2, 62) derart zu steuern, dass unter Verwendung des Inverter-Leistungsteils (4) und des Kommutators (6) als Ausgangsstrom zum Schweißnahtreinigen wahlweise ein Wechselstrom oder ein Gleichstrom bereitgestellt wird.

8. Lichtbogenschweißgerät nach einem der Ansprüche 1 bis 7,
**dadurch gekennzeichnet, dass** das Lichtbogenschweißgerät (2, 62) eine Elektrolytbereitstellungseinrichtung (68) zur Bereitstellung eines Elektrolyts für die Schweißnahtreinigungsfunktion aufweist.

9. Lichtbogenschweißgerät nach einem der Ansprüche 1 bis 8,
**dadurch gekennzeichnet,**
**dass** das Lichtbogenschweißgerät (2, 62) eine Nutzerschnittstelle (20) aufweist, die einem Nutzer Zugriff auf die Schweißnahtreinigungsfunktion erlaubt.

10. Lichtbogenschweißgerät nach Anspruch 9,
**dadurch gekennzeichnet,**
**dass** das Lichtbogenschweißgerät (2, 62) durch eine vordefinierte Nutzereingabe über die Nutzerschnittstelle (20) von einem Schweißmodus in einen Schweißnahtreinigungsmodus umschaltbar ist, wobei im Schweißnahtreinigungsmodus die Schweißfunktion deaktiviert und die Schweißnahtreinigungsfunktion aktiviert ist.

11. System (52, 80), umfassend
- ein Lichtbogenschweißgerät (2, 62) nach einem der Ansprüche 1 bis 10 und
- eine an dem Lichtbogenschweißgerät (2, 62) anschließbare Schweißnahtreinigungselektrode (40, 66).

12. Verfahren zum Reinigen einer Schweißnaht (82) an einem Werkstück (84) mittels eines Lichtbogenschweißgeräts (2, 62) nach einem der Ansprüche 1 bis 10 oder mittels eines Systems (52, 80) nach Anspruch 11,
- bei dem eine Schweißnahtreinigungselektrode (40, 66) und das Werkstück (84) an einen jeweiligen Anschluss des Lichtbogenschweißgeräts (2, 62) angeschlossen werden,
- bei dem mit dem Lichtbogenschweißgerät (2, 62) ein Ausgangsstrom zum Schweißnahtreinigen bereitgestellt wird und
- bei dem die Schweißnahtreinigungselektrode (40, 66) über eine zu reinigende Schweißnaht (82) geführt wird.

## Claims

1. Arc welding device (2, 62)
- comprising an inverter power unit (4) configured to provide an output current for arc welding, and
- comprising a control unit (16) configured to control the arc welding device (2, 62),
- wherein the arc welding device (2, 62) provides, in addition to a welding function, a weld seam cleaning function, wherein the control unit (16) is configured, for the weld seam cleaning function, to control the arc welding device (2, 62) such that, using the inverter power unit (4), an output current for weld seam cleaning is provided, wherein the output voltage of the arc welding device during provision of the output current for weld seam cleaning is limited to a maximum voltage, preferably of 20 V or less, more preferably of 15 V or less,
**characterized**
- **in that** the control unit (16) is configured, for the weld seam cleaning function, to effect a voltage regulation of the output voltage of the arc welding device during provision of the output current for weld seam cleaning when the output voltage of the arc welding device is above a predetermined or predeterminable voltage regulation threshold value.

2. Arc welding device according to claim 1,
**characterized in that** the output voltage of the arc welding device during provision of the output current for weld seam cleaning is limited to a maximum voltage in the range of 5 V - 20 V, preferably 8 V - 15 V.

3. Arc welding device according to claim 1 or 2,
**characterized in that** the amperage of the output current for weld seam cleaning is limited to a maximum amperage of 25 A or less, preferably 20 A or less.

4. Arc welding device according to any one of claims 1 to 3,
**characterized in that** the amperage of the output current for weld seam cleaning is limited to a maximum amperage in the range of 10 - 20 A.

5. Arc welding device according to any one of claims 1 to 4,
**characterized in that** the control unit (16) is configured, for the weld seam cleaning function, to effect a current regulation of the output current for weld seam cleaning during provision of the output current for weld seam cleaning when the output voltage of the arc welding device is below a predetermined or predeterminable current regulation threshold value.

6. Arc welding device according to any one of claims 1 to 5,
**characterized in that** the arc welding device (2, 62) further comprises a commutator (6) configured to reverse the current direction of the output current, and that the control unit (16) is configured, for the weld seam cleaning function, to control the arc welding device (2, 62) such that, using the commutator (6), an alternating current is provided as output current for weld seam cleaning.

7. Arc welding device according to claim 6,
**characterized in that** the control unit (16) is configured, for the weld seam cleaning function, to control the arc welding device (2, 62) such that, using the inverter power unit (4) and the commutator (6), either an alternating current or a direct current is selectively provided as output current for weld seam cleaning.

8. Arc welding device according to any one of claims 1 to 7,
**characterized in that** the arc welding device (2, 62) comprises an electrolyte provision device (68) for providing an electrolyte for the weld seam cleaning function.

9. Arc welding device according to any one of claims 1 to 8,
**characterized in that** the arc welding device (2, 62) comprises a user interface (20) that allows a user access to the weld seam cleaning function.

10. Arc welding device according to claim 9,
**characterized in that** the arc welding device (2, 62) can be switched from a welding mode to a weld seam cleaning mode by a predefined user input via the user interface (20), wherein in the weld seam cleaning mode the welding function is deactivated and the weld seam cleaning function is activated.

11. System (52, 80), comprising
- an arc welding device (2, 62) according to any one of claims 1 to 10, and
- a weld seam cleaning electrode (40, 66) connectable to the arc welding device (2, 62).

12. Method for cleaning a weld seam (82) on a workpiece (84) using an arc welding device (2, 62) according to any one of claims 1 to 10 or using a system (52, 80) according to claim 11,
- wherein a weld seam cleaning electrode (40, 66) and the workpiece (84) are connected to respective terminals of the arc welding device (2, 62),
- wherein an output current for weld seam cleaning is provided by the arc welding device (2, 62), and
- wherein the weld seam cleaning electrode (40, 66) is guided over a weld seam (82) to be cleaned.

## Revendications

1. Appareil de soudage à l'arc (2, 62)
- avec une partie de puissance à onduleur (4) qui est conçue pour fournir un courant de sortie pour le soudage à l'arc, et
- avec une unité de commande (16) qui est conçue pour commander l'appareil de soudage à l'arc (2, 62),
- dans lequel l'appareil de soudage à l'arc (2, 62) fournit, outre une fonction de soudage, une fonction de nettoyage du cordon de soudure, dans lequel l'unité de commande (16) pour la fonction de nettoyage du cordon de soudure est conçue pour commander l'appareil de soudage à l'arc (2, 62) de telle sorte que, en utilisant la partie de puissance à onduleur (4), un courant de sortie est fourni pour le nettoyage du cordon de soudure, dans lequel la tension de sortie de l'appareil de soudage à l'arc est limitée, lors de la fourniture du courant de sortie pour le nettoyage du cordon de soudure, à une tension maximale, de préférence de 20 V ou moins, de préférence encore de 15 V ou moins,
**caractérisé en ce que**
- l'unité de commande (16) pour la fonction de nettoyage du cordon de soudure est conçue pour effectuer une régulation de la tension de sortie de l'appareil de soudage à l'arc lors de la fourniture du courant de sortie pour le nettoyage du cordon de soudure, lorsque la tension de sortie de l'appareil de soudage à l'arc est supérieure à une valeur seuil de régulation de tension prédéfinie ou pouvant être prédéfinie.

2. Appareil de soudage à l'arc selon la revendication 1,
**caractérisé en ce que** la tension de sortie de l'appareil de soudage à l'arc est limitée, lors de la fourniture du courant de sortie pour le nettoyage du cordon de soudure, à une tension maximale comprise entre 5 V et 20 V, de préférence entre 8 V et 15 V.

3. Appareil de soudage à l'arc selon la revendication 1 ou 2,
**caractérisé en ce que** l'intensité du courant de sortie pour le nettoyage du cordon de soudure est limitée à une intensité maximale de 25 A ou moins, de préférence 20 A ou moins.

4. Appareil de soudage à l'arc selon l'une des revendications 1 à 3,
**caractérisé en ce que** l'intensité du courant de sortie pour le nettoyage du cordon de soudure est limitée à une intensité maximale comprise entre 10 et 20 A.

5. Appareil de soudage à l'arc selon l'une des revendications 1 à 4,
**caractérisé en ce que** l'unité de commande (16) pour la fonction de nettoyage du cordon de soudure est conçue, lors de la fourniture du courant de sortie pour le nettoyage du cordon de soudure, pour effectuer une régulation du courant de sortie pour le nettoyage du cordon de soudure lorsque la tension de sortie de l'appareil de soudage à l'arc est inférieure à une valeur seuil de régulation du courant prédéfinie ou pouvant être prédéfinie.

6. Appareil de soudage à l'arc selon l'une des revendications 1 à 5,
**caractérisé en ce que** l'appareil de soudage à l'arc (2, 62) comprend en outre un commutateur (6) qui est conçu pour inverser le sens du courant de sortie, et **en ce que** l'unité de commande (16) pour la fonction de nettoyage du cordon de soudure est conçue pour commander l'appareil de soudage à l'arc (2, 62) de telle sorte qu'un courant alternatif soit fourni comme courant de sortie pour le nettoyage du cordon de soudure en utilisant le commutateur (6).

7. Appareil de soudage à l'arc selon la revendication 6,
**caractérisé en ce que** l'unité de commande (16) pour la fonction de nettoyage du cordon de soudure est conçue pour commander l'appareil de soudage à l'arc (2, 62) de telle sorte qu'un courant alternatif ou un courant continu soit fourni de manière sélective comme courant de sortie pour le nettoyage du cordon de soudure en utilisant la partie de puissance à onduleur (4) et le commutateur (6).

8. Appareil de soudage à l'arc selon l'une des revendications 1 à 7,
**caractérisé en ce que** l'appareil de soudage à l'arc (2, 62) comprend un dispositif d'alimentation en électrolyte (68) destiné à fournir un électrolyte pour la fonction de nettoyage du cordon de soudure.

9. Appareil de soudage à l'arc selon l'une des revendications 1 à 8,
**caractérisé en ce que** l'appareil de soudage à l'arc (2, 62) comprend une interface utilisateur (20) qui permet à un utilisateur d'accéder à la fonction de nettoyage du cordon de soudure.

10. Appareil de soudage à l'arc selon la revendication 9,
**caractérisé en ce que** l'appareil de soudage à l'arc (2, 62) peut être commuté d'un mode de soudage à un mode de nettoyage du cordon de soudure au moyen d'une saisie utilisateur prédéfinie par le biais de l'interface utilisateur (20), dans lequel la fonction de soudage est désactivée et la fonction de nettoyage du cordon de soudure est activée dans le mode de nettoyage du cordon de soudure.

11. Système (52, 80) comprenant
- un appareil de soudage à l'arc (2, 62) selon l'une des revendications 1 à 10, et
- une électrode de nettoyage du cordon de soudure (40, 66) pouvant être connectée à l'appareil de soudage à l'arc (2, 62).

12. Procédé pour nettoyer un cordon de soudure (82) sur une pièce à usiner (84) à l'aide d'un appareil de soudage à l'arc (2, 62) selon l'une des revendications 1 à 10 ou à l'aide d'un système (52, 80) selon la revendication 11,
- dans lequel une électrode de nettoyage du cordon de soudure (40, 66) et la pièce à usiner (84) sont branchées à une borne respective de l'appareil de soudage à l'arc (2, 62),
- dans lequel l'appareil de soudage à l'arc (2, 62) fournit un courant de sortie pour nettoyer le cordon de soudure et
- dans lequel l'électrode de nettoyage du cordon de soudure (40, 66) est guidée sur un cordon de soudure (82) à nettoyer.
**characterized in that** the amperage of the output current for weld seam cleaning is limited to a maximum amperage of 25 A or less, preferably 20 A or less.
